# DEMANDE DE BREVET EUROPEEN

(11) **EP 1 947 066 A1**
(43) Date de publication de la demande: **23.07.2008**
(21) Numéro de dépôt: 07447003.0
(22) Date de dépôt: 17.01.2007
(51) Int. Cl.: C04B 7/24, C04B 7/38, C04B 7/40

(54) **Procede de valorisation de boues de dragage et industrielles**

(71) Demandeur: Kreusch, Wilhelm, 4700 Eupen (BE)
(72) Inventeur: Kreusch, Wilhelm, 4700 Eupen (BE)
(74) Mandataire: pronovem

(57) **Abrégé**

La présente invention se rapporte à un procédé de valorisation de boues de dragage et industrielles avec une teneur en eau comprise entre 30 et 80% en poids, dans un procédé de fabrication de ciment dans lequel lesdites boues provenant d'une cuve de récolte sont acheminées par un moyen de transfert vers le précalcinateur de la cimenterie où elles sont injectées en amont du four rotatif pour y être valorisées.

## Description

### Objet de l'invention

La présente invention se rapporte à un nouveau procédé de valorisation de boues dans les cimenteries, et en particulier à l'utilisation de boues de dragage et de boues industrielles issues d'un procédé d'épuration physico-chimique comportant une faible teneur en matière sèche.

### Etat de la technique

Les boues de dragage proviennent de l'entretien des voies d'eau et les boues industrielles proviennent de systèmes d'épuration installés dans les industries (nettoyage de camions citernes ou containers, raffineries de pétrole) ; elles ont généralement subi un traitement d'épuration physico-chimique,du type lait de chaux et chlorure ferrique en tant que coagulant. Ces boues sont donc très différentes des boues issues des stations d'épuration communales qui subissent un traitement biologique.

Afin de réduire le volume de ces boues, on procède généralement à un assèchement par lagunage ou une déshydratation mécanique qui permet d'obtenir des gâteaux contenant une teneur en eau résiduelle variable.

Les boues industrielles subissent généralement une déshydratation mécanique. Les systèmes de déshydratation mécanique les plus connus sont le filtre à bande, la centrifugeuse ou un système de filtre-presse. La teneur en eau doit être optimisée en fonction de nombreux critères où il faut à la fois concilier une viscosité maximale au-delà de laquelle les boues ne peuvent plus être pompées et une teneur en eau maximale acceptable par le four de cimenterie au-delà de laquelle le refroidissement du four devient trop important.

Comme indiqué plus haut, il existe également des aides chimiques à la déshydratation telles que les floculants organiques, le lait de chaux, la chaux ou le chlorure ferrique (traitement physico chimique).

Les boues ainsi épaissies ou partiellement déshydratées peuvent être éliminées ou valorisées de plusieurs façons. L'une des filières d'élimination consiste en la mise en centre d'enfouissement technique qui se révèle problématique car elle concentre la contamination et n'est pas considérée comme une opération de valorisation.

Il reste alors l'incinération, ainsi que la calcination thermique.

L'incinération de boues se fait généralement dans un four dédié à cet effet tel que le four à lit fluidisé, le four rotatif ou le four à grille. Ces fours qui constituent des outils d'incinération nécessitent généralement une énergie d'appoint pour faciliter la combustion. Celle-ci est principalement fournie sous la forme d'énergie fossile. L'inconvénient majeur d'une telle incinération est le fait qu'il subsiste toujours un résidu d'incinération sous la forme de cendres, difficiles à éliminer.

Par ailleurs, l'incinération de ces boues nécessite généralement une étape préalable qui est un séchage thermique ou une calcination thermique préliminaire dans lequel on obtient alors un produit ayant une humidité résiduelle entre 1 et 10%. Le séchage ou calcination thermique utilise également beaucoup d'énergie fossile car les sécheurs dits « sécheurs directs » utilisent directement les gaz de combustion alors que les sécheurs dits « sécheurs indirects » utilisent soit la vapeur soit un fluide thermique. Le produit obtenu dans un tel procédé de séchage ou de calcination peut être incinéré dans un four à cimenterie au niveau de la tuyère ou de la pré-calcination.

Certaines boues d'épuration sont mélangées avec de la poudre de ciment pour être asséchées préalablement. Un dispositif mélangeur pour réaliser une telle opération est divulgué dans le document GB 2296451. Un procédé allant également dans ce sens est divulgué dans le document DE 69019643 T2.

Le document US 6484416 divulgue un procédé de production de clinker ou l'inventeur utilise des boues d'épuration préalablement déshydratées mécaniquement jusqu'à une teneur en eau inférieure à 20% suivi d'un séchage thermique pour atteindre une teneur en eau inférieure à 1% en poids.

La demande de brevet internationale WO/9525075 divulgue un procédé permettant de réduire les émissions polluantes durant la fabrication du ciment en introduisant des particules de boue de station d'épuration faiblement déshydratées en aval du pré-calcinateur dans une zone ou différentes émissions de gaz se rencontrent.

### Buts de l'invention

La présente invention a pour objectif de divulguer un procédé de valorisation apte à utiliser des boues de dragage ou les boues industrielles à haute teneur en humidité permettant d'éviter l'étape de pré-séchage ou de pré-calcination de celles-ci.

Elle vise en particulier à divulguer un procédé de valorisation de boues de dragage ou industrielles déshydratées mécaniquement ou naturellement et à haute teneur en humidité (30 à 80%) dans un pré-calcinateur d'un four de cimenterie. Ce procédé permettant de valoriser lesdites boues comme matière première dans la fabrication du ciment (teneur en silice, alumine, fer).

### Résumé de l'invention

La présente invention divulgue un procédé de valorisation de boues de dragage et industrielles déshydratées mécaniquement ou naturellement avec une teneur en eau comprise entre 30 et 80% en poids, dans un procédé de fabrication de ciment caractérisé en ce que lesdites boues provenant d'une cuve de récolte sont acheminées par un moyen de transfert vers le précalcinateur de la cimenterie où elles sont injectées en amont du four rotatif pour y être valorisées.

Selon des formes particulières de réalisation, l'invention comporte l'une ou plusieurs des caractéristiques suivantes :
- les boues sont injectées au niveau de la chambre de mélange ;
- lors du transfert desdites boues de la cuve de récolte vers le précalcinateur, lesdites boues passent préalablement par un silo de stockage intermédiaire avant d'être acheminées par ledit moyen de transfert vers la chambre de mélange ;
- l'injection desdites boues dans ladite chambre de mélange se fait par un moyen d'injection ;
- le moyen de transfert est une vis avec ou sans âme, un transporteur à chaîne ou un racleur à godets ;
- le moyen d'injection est une pompe de matière visqueuse telle qu'une extrudeuse avec accumulateur hydraulique ou une pompe Moineau ;
- lesdites boues ont subi une déshydratation préalable.

L'invention divulgue par ailleurs l'utilisation de boues de dragage ou de boues industrielles avec une teneur en eau comprise entre 30 et 85% en poids, dans un procédé de fabrication de ciment.

### Brève description des figures

La figure 1 représente le schéma général du flux des boues de dragage ou industrielles depuis leur récolte à la cimenterie jusqu'à leur introduction au niveau du précalcinateur en passant éventuellement par un silo intermédiaire de stockage.

La figure 2 représente une vue de détail de la partie du précalcinateur où l'introduction de la boue est réalisée au niveau de la chambre de mélange.

### Description détaillée de l'invention

La présente invention divulgue un procédé de valorisation de boues de dragage ou industrielles partiellement déshydratées. Par boues partiellement déshydratées, nous entendons des teneurs en eau comprises entre 30 et 80% en poids, la plage habituellement rencontrée se situant entre 40 et 80% en poids. Ce taux de déshydratation s'obtient par déshydratation mécanique ou simplement par séchage statique.

La valorisation se fait par l'intermédiaire d'un dispositif de précalcination comprenant de préférence une boite de mélange. La préférence sera donnée à une boue de composition minérale mais il est néanmoins possible d'introduire également des boues biologiques de même qu'une certaine quantité de résidus liquides tels que des huiles par exemple, pouvant faciliter le transfert d'une boue à faible teneur en humidité.

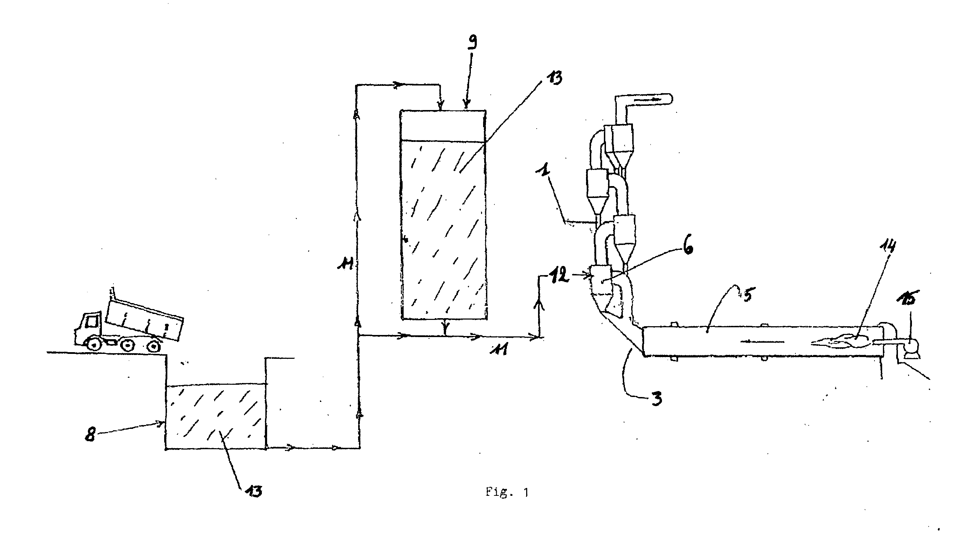

Pour amener les boues 13 vers le dispositif de précalcination 1 du four de cimenterie, celle-ci est d'abord rassemblée dans un bunker de versage que nous appellerons cuve de récolte 8. A partir de cette cuve de récolte 8, un transfert desdites boues 13 peut se faire soit directement vers le précalcinateur 1, soit vers un silo de stockage 9 intermédiaire (voir Fig.1). Le silo de stockage intermédiaire 9 n'est pas indispensable mais il est souhaitable dans la mesure où il permet de surmonter des périodes sans livraison de boues 13 (fin de semaines, etc.). Le stockage intermédiaire possède de préférence une capacité nettement supérieure à celle de la cuve de récolte. A titre d'exemple, dans la présente invention, la cuve de récolte possède un volume de l'ordre de 50m³ et le silo de stockage intermédiaire un volume de l'ordre de 500m³. Ce silo 9 possède un système d'extraction à débit variable et un moyen de transfert vers le pré-calcinateur. Ces deux moyens de transfert pouvant être identiques et subissant les mêmes contraintes, nous les appellerons simplement moyen de transfert 11. Un moyen d'injection 12 introduit lesdites boues 13 directement dans le pré-calcinateur 1 au niveau d'un endroit appelé chambre de mélange.

Un élément particulièrement intéressant de la présente invention réside dans le fait que ces boues 13 ne nécessitent aucun préséchage thermique et aucune calcination préalable. Un autre élément particulièrement intéressant est que lesdites boues 13 ne génèrent aucun déchet tel que des cendres. Lesdites boues 13 peuvent donc être valorisées en tant que matières premières pour le ciment après avoir été éventuellement débarrassées de la proportion de matières combustibles.

La quantité de boues 13 ainsi introduites peut varier considérablement en fonction de leur consistance, des besoins et de leur disponibilité. Dans une cimenterie avec un précalcinateur 1, cela peut varier de 0,5 à 20 tonnes à l'heure.

Le dosage des boues 13 dans le précalcinateur 1 se fait essentiellement en fonction de la composition chimique desdites boues 13, du taux l'humidité de celles-ci ou tout simplement de la capacité disponible.

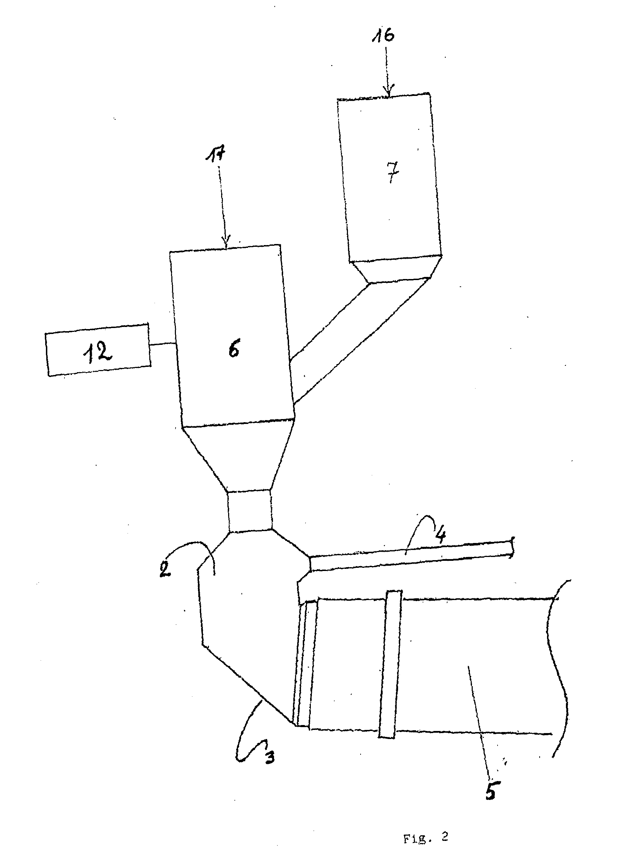

L'introduction des boues de dragage ou industrielles 13 se fait de préférence au niveau de la chambre de mélange 6. La boîte à fumées 2 se situe en dessous de la chambre des mélanges 6 comme le montre la figure 2.

Le transfert des boues 13 de la cuve de récolte 8 vers le silo de stockage 9 ou entre ledit silo de stockage 9 et le précalcinateur 1 se fait par un moyen de transfert 11, c'est à dire par tout moyen bien connu de l'homme de métier apte à transporter des masses visqueuses. Des exemples non limitatifs peuvent être un transporteur à chaîne ou un racleur à godet ainsi qu'une vis avec ou sans âme.

L'injection finale desdites boues 13 dans la chambre de mélange 6 peut également se faire au moyen dudit moyen de transfert 11. Cependant, dans la mesure où les changements de consistance desdites boues sont fréquents, on peut avoir recours à un moyen d'injection 12 capable de générer une forte pression pour assurer l'alimentation, même en cas de formation d'un bouchon. Pour ledit moyen d'injection 12 on peut envisager une pompe à matière épaisse. Nous citerons à titre d'exemples non limitatifs, une vis avec ou sans âme, une pompe à piston fonctionnant elle-même avec un moteur hydraulique, une extrudeuse avec accumulateur à piston hydraulique. Le moyen d'injection 2 ne peut évidemment pas aller jusqu'à l'entrée immédiate de la chambre de mélange pour des raisons de températures excessives. Le transfert final de la boue 13 entre le moyen d'injection 12 et le point d'introduction dans la chambre de mélange 6 se fait donc de préférence à travers une tuyauterie résistant à des pressions et des températures élevées (150 bars). Les pressions sont bien entendu fonction de la consistance sans cesse changeante des boues 13 et de leur séchage au niveau du précalcinateur.

**Légende**
- 1.: Précalcinateur
- 2.: Boîte à fumées
- 3.: Glisse
- 4.: By-pass pour les poussières de purge
- 5.: Four rotatif
- 6.: Chambre de mélange
- 7.: Foyer à combustibles
- 8.: Cuve de récolte
- 9.: Silo de stockage intermédiaire
- 11.: Moyen de transfert des boues
- 12.: Moyen d'injection des boues
- 13.: Boues de station d'épuration faiblement déshydratées
- 14.: Flamme
- 15.: Brûleur
- 16.: Combustibles
- 17.: Matières premières

## Revendications

1. Procédé de valorisation de boues de dragage et de boues industrielles (13) déshydratées mécaniquement ou naturellement avec une teneur en eau comprise entre 30 et 80 %, dans un procédé de fabrication de ciment **caractérisé en ce que** lesdites boues (13) provenant d'une cuve de récolte (8) sont acheminées par un moyen de transfert (11) vers le précalcinateur (1) de la cimenterie où elles sont injectées en amont du four rotatif (5) pour y être valorisées.

2. Procédé selon la revendication 1 **caractérisé en ce que** les boues sont injectées au niveau de la chambre de mélange (6).

3. Procédé selon la revendication 1 **caractérisé en ce que** lors du transfert desdites boues de la cuve de récolte (8) vers le précalcinateur, lesdites boues passent préalablement par un silo de stockage intermédiaire (9) avant d'être acheminées par ledit moyen de transfert (11) vers la chambre de mélange (6).

4. Procédé selon la revendication 1 **caractérisé en ce que** l'injection desdites boues (13) dans ladite chambre de mélange (6) se fait par un moyen d'injection (12).

5. Procédé selon la revendication 1 **caractérisé en ce que** le moyen de transfert (11) est une vis avec ou sans âme, un transporteur à chaîne ou un racleur à godets.

6. Procédé selon la revendication 1 **caractérisé en ce que** le moyen d'injection (12) est une pompe de matière visqueuse telle qu'une extrudeuse avec accumulateur hydraulique ou une pompe Moineau.

7. Procédé selon la revendication 1 **caractérisé en ce que** lesdites boues (13) ont subi une déshydratation préalable.

8. Utilisation de boues de dragage ou de avec une teneur en eau comprise entre 30 et 80% en poids, dans un procédé de fabrication de ciment.

9. Utilisation de boues industrielles avec une teneur en eau comprise entre 30 et 80% en poids, dans un procédé de fabrication de ciment.
